(19) Europäisches Patentamt
European Patent Office
Office européen des brevets

(11) Numéro de publication: **0 508 023 A1**

(12) **DEMANDE DE BREVET EUROPEEN**

(21) Numéro de dépôt: 91460023.4

(22) Date de dépôt: **12.04.91**

(51) Int. Cl.⁵: **C05F 3/00**, C02F 1/52, B01D 21/00

(43) Date de publication de la demande: **14.10.92 Bulletin 92/42**

(84) Etats contractants désignés: **AT BE CH DE DK ES FR GB GR IT LI LU NL SE**

(71) Demandeur: **Baldwin, Anthony** 5 Leur ar Marc'h F-29470 Plougastel(FR)

(72) Inventeur: **Baldwin, Anthony** 5 Leur ar Marc'h F-29470 Plougastel(FR)

(74) Mandataire: **Le Guen, Louis François** CABINET Louis LE GUEN 38, rue Levavasseur B.P. 91 F-35802 Dinard Cédex(FR)

(54) **Procédé de traitement d'effluents et installation pour la mise en oeuvre de ce procédé.**

(57) la présente invention concerne un procédé de traitement d'effluents consistant en la séparation des éléments en suspension contenus dans la phase aqueuse desdits effluents. Il consiste:

a) à mettre en contact lesdits effluents soit avec un matériau diélectrique pouvant se charger négativement électrostatiquement si l'on désire séparer des éléments en suspension de charge positive soit un matériau diélectrique pouvant se charger positivement électrostatiquement si l'on désire séparer des éléments en suspension de charge négative, afin d'effectuer une neutralisation des charges des éléments en suspension dans la phase aqueuse desdits effluents,

b) à effectuer un processus de précipitation des effluents dont les éléments en suspension ont leur charge neutralisée, puis

c) à séparer, après précipitation, la phase aqueuse des boues constituées par les éléments qui ont précipité.

L'invention concerne également une installation pour la mise en oeuvre de ce procédé.

FIG.1

EP 0 508 023 A1

La présente invention concerne un procédé de traitement d'effluents consistant, en particulier, en la séparation des éléments en suspension dans la phase aqueuse desdits effluents.

On a appliqué ce procédé à l'épuration de lisier, notamment de lisier de porc, si bien que la description suivante est relative au traitement du lisier. Néanmoins, la présente invention ne se limite pas à cette application particulière.

La présente invention concerne également une installation destinée à la mise en oeuvre de ce procédé.

Le lisier est une source de nuisance notamment par son odeur et une source de pollution par les teneurs excessives en carbone, azote et phosphore qu'il contient. Néanmoins, du fait de sa teneur importante en éléments fertilisants, on l'utilise en tant qu'engrais en l'épandant ou en l'enfouissant dans le sol.

Dans les zones où se trouvent des porcheries au nombre d'animaux important, la quantité de lisier produit est supérieure à ce que la surface de cette zone peut normalement et raisonnablement absorber sans risque de pollution. Il est donc nécessaire de mettre en place des procédés de traitement d'épuration ou de valorisation du lisier pour qu'une fois traité, il puisse être épandu sans risque de pollution ou utilisé, par exemple, dans un produit fertilisant.

On connaît des procédés de traitement du lisier de porcs et on citera, à titre d'exemple non limitatif, les documents de brevets FR-A-2 632 808, FR-A-2 623 495, FR-A-2 620 637 et EP-A-360 945.

Les procédés décrits dans les documents mentionnés ci-dessus ne donnent pas toujours entière satisfaction et sont d'une mise en oeuvre généralement coûteuse.

On a cherché un procédé qui ne présente pas ces inconvénients et on a trouvé qu'on obtenait d'excellents résultats et même surprenants quant à leur qualité en soumettant des effluents, tels que du lisier de porc, à un procédé qui consiste:

a) à mettre en contact lesdits effluents soit avec un matériau diélectrique pouvant se charger négativement électrostatiquement si l'on désire séparer des éléments en suspension de charge positive soit un matériau diélectrique pouvant se charger positivement électrostatiquement si l'on désire séparer des éléments en suspension de charge négative, afin d'effectuer une neutralisation des charges des éléments en suspension dans la phase aqueuse desdits effluents,

b) à effectuer un processus de précipitation des effluents dont les éléments en suspension ont leur charge neutralisée, puis

c) à séparer, après précipitation, la phase aqueuse des boues constituées par les éléments qui ont précipité.

Des résultats obtenus par ce procédé sont exposés dans la suite de la présente description et on comprendra, à leur lecture, l'intérêt d'un tel procédé.

Selon une autre caractéristique de l'invention, le processus de précipitation de l'étape b) est une décantation.

Selon une autre caractéristique de l'invention, le processus de précipitation de l'étape b) consiste à soumettre les effluents dont les charges des éléments en suspension ont été neutralisées à une surpression si bien que lesdits éléments précipitent.

En agissant de la sorte, on accélère le processus de précipitation par rapport à un simple processus de décantation. Cette accélération est encore accru si, préalablement au processus de précipitation de l'étape b) mais après l'étape a), on dissout de l'air dans les effluents.

La présente invention concerne également une installation pour la mise en oeuvre du procédé précédemment décrit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue schématique d'une installation selon la présente invention, et

la Fig. 2 est une vue en coupe selon un plan médian d'un élément utilisé dans le procédé selon l'invention.

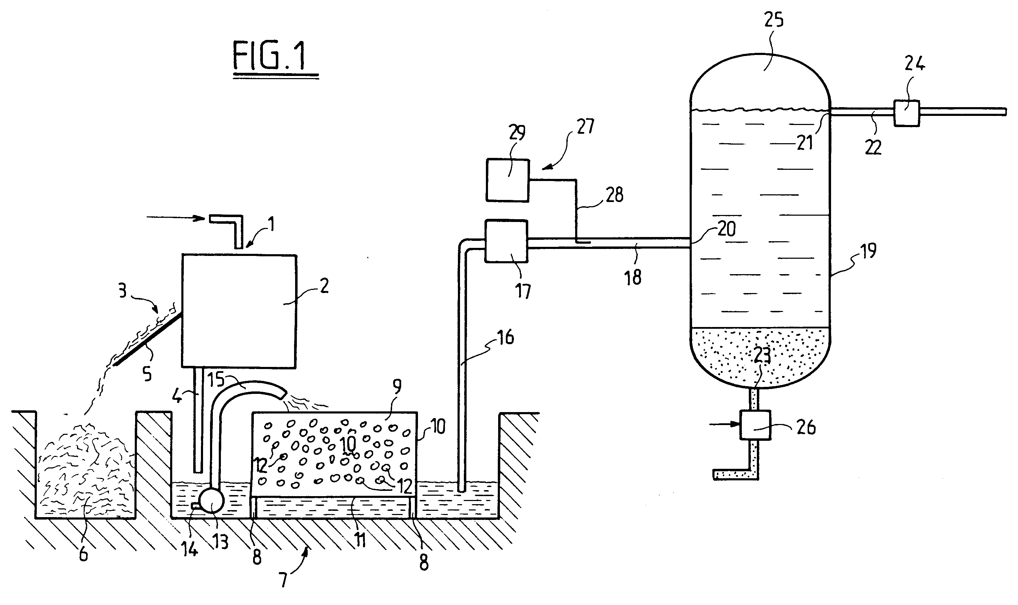

L'installation représentée à la Fig. 1 comprend une arrivée de lisier 1 qui se déverse dans un séparateur liquide/solide 2. Celui-ci a une sortie 3 pour les éléments solides contenus dans le lisier, comme des morceaux de paille, et une sortie 4 pour les éléments liquides. Le séparateur 2 est, par exemple, du type mécanique dans lequel les éléments solides sont forcés de passer sur un tamis alors que les éléments liquides coulent à travers ce tamis.

La sortie 4 est, sur la Fig. 1, constituée d'une rampe 5 sur laquelle les éléments solides circulent pour être dirigés vers une fosse 6 où ils sont récupérés.

Les éléments liquides sont, quant à eux, déversés dans une cuve 7 contenant une quantité de lisier liquide et dans laquelle repose, sur quatre pieds 8 (deux seulement sont visibles sur la Fig. 1), un bac 9.

2

Celui-ci présente une forme sensiblement parallélépipèdique. Il est métallique, a ses quatre parois latérales 10 pleines et son fond 11 qui se présente, par exemple, sous la forme d'un grillage. Il est rempli d'éléments de plastique 12 présentant une grande surface dans un petit volume.

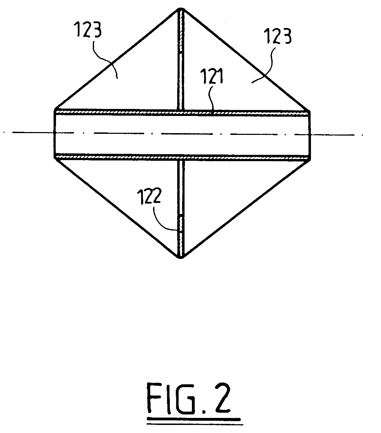

Un tel élément 12 peut être du type de celui qui est représenté à la Fig. 2 en coupe. Il comprend un tube cylindrique 121 et une couronne 122 d'où partent, radialement des ailes triangulaires 123. Les ailes 123 sont, par exemple, au nombre de dix réparties régulièrement tout autour du périmètre du tube 121. La matière plastique qui compose les éléments 12 est du type qui peut se charger en électricité électrostatique négative, tel que du polypropylène.

Une pompe immergée 13 a son entrée 14 dans le lisier liquide présent dans la cuve 7 et sa sortie se fait par un tuyau 15 qui déverse le lisier pompé sur la surface des éléments 12 contenus dans le bac 9.

La pompe 13 crée un circuit fermé de lisier liquide par lequel, de la cuve 7, il passe dans le bac 9 en s'écoulant sur les éléments de plastique 12 pour retomber dans la cuve 7.

Le lisier dans la cuve 7 est aspiré, via une conduite d'aspiration 16, par une pompe de surpression 17 et est refoulé, via une conduite de refoulement 18, dans un ballon 19. Celui-ci présente, par exemple, une forme générale cylindrique verticale et comporte une arrivée de lisier 20 sensiblement au milieu de sa paroi latérale, une sortie de liquide 21 dans la partie supérieure de la partie cylindrique du ballon 19 à laquelle est reliée une canalisation de sortie 22, et une sortie 23, dans le fond du ballon 19, pour les boues qui ont précipité.

Une vanne de régulation de pression 24 est prévue sur la canalisation de sortie 22 du ballon 19.

Comme on peut le voir sur la Fig. 1, le ballon 19 est rempli de lisier liquide, avec dans le fond, les boues qui ont précipité. La surface libre du liquide se trouve sensiblement au niveau de la sortie 21 et un matelas d'air sous pression 25 est maintenu dans la partie supérieure du ballon 19.

A la sortie 23, est prévue une vanne 26 qui est commandée pour s'ouvrir périodiquement et pour permettre l'évacuation des boues stockées dans le fond du ballon 19.

Dans la canalisation de refoulement 18 de la pompe 17, est prévu un dispositif de dispersion d'air sous pression 27 constitué d'un tube 28 dont une extrémité se trouve dans la canalisation de refoulement 18 dirigée vers le ballon 19 et dont l'autre extrémité est reliée à un compresseur 29.

Le fonctionnement du ballon 19 est le suivant. La pompe 17 injecte, sous pression dans le ballon 19, le lisier liquide issu de la cuve. La vanne de régulation 24 assure une régulation de la pression du matelas d'air 25 dans le ballon 19 à un niveau sensiblement constant. La pression régulée est ainsi comprise entre 2 et 10 bars et est avantageusement de 6 bars.

Compte tenu de la pression qui est exercée sur le liquide présent dans la canalisation de refoulement 18, l'air sous pression injecté par le tube 28 se dissout dans le lisier de la canalisation 18.

Le fonctionnement de l'installation précédemment décrite est le suivant. Le lisier, tel qu'il sort d'une porcherie, est séparé, d'une part, en ses éléments solides et, d'autre part, en ses éléments liquides dans le séparateur 2. Les éléments liquides apparaissent à la sortie 4 du séparateur 2 sous forme d'une solution aqueuse contenant des éléments en suspension. Ils sont déversés dans la cuve 7 où, au moyen de la pompe 13, ils passent, selon des cycles répétés, sur les éléments 12 contenus dans le bac 9.

On a pu constater que, sous l'effet de ces cycles répétés, le lisier perd la charge électrique positive qu'il a au préalable à la sortie du séparateur 2. On attribue cette charge électrique positive aux charges électrostatiques positives que possèdent les éléments en suspension dans la phase aqueuse du lisier. La perte de la charge du lisier lors des cycles répétés serait alors le résultat d'une neutralisation des charges positives des éléments en suspension par celles négatives qui sont créées par le liquide en passant sur les éléments 12.

On comprend que le choix du matériau pour les éléments 12 n'est pas indifférent. Il doit être du type qui peut se charger en électricité électrostatique négative pour pouvoir neutraliser les charges positives des éléments en suspension. Ce matériau est avantageusement du polypropylène.

Pour neutraliser les charges d'éléments en suspension qui seraient négatives, il serait nécessaire de disposer, pour les éléments 12, d'un matériau qui peut se charger en électricité électrostatique positive.

Cette neutralisation a réellement lieu si les éléments 12 sont reliés, électriquement parlant, à la terre. La conduction électrique entre la surface des éléments 12 et la terre est assurée, d'une part, par le liquide lui-même passant sur les éléments 12 et retombant dans la cuve 7 et, d'autre part, par les parois latérales du bac 9 qui sont métalliques.

On a remarqué que le lisier qui a été soumis à un tel traitement de passages répétés sur des éléments 12 en polypropylène a ses éléments en suspension qui précipitent. Cette précipitation pourrait être effectuée dans un bac à décantation dans lequel repose le lisier traité. Elle demanderait toutefois un temps assez long d'au moins 24 heures.

On a constaté que le temps de séjour du lisier présent dans la cuve 7 et soumis à des cycles répétés de passage par le bac 9 ne peut dépasser une certaine durée qui est fonction de la qualité du lisier. Ce temps de séjour maximum est compris entre 8 et 24 heures. Après cette durée, le lisier acquiert une charge négative et le pouvoir de précipitation qu'il avait acquis disparaît.

Dans le ballon 19, le processus de précipitation des éléments en suspension contenus jusqu'alors dans le lisier est accéléré. Soumise à la pression qui règne dans le matelas 25, la phase aqueuse du lisier introduit dans le ballon 19 a sa densité qui diminue alors que celle des éléments en suspension est inchangée. La poussée d'Archimède qui s'exerce alors sur ces éléments en suspension diminue donc en proportion et les éléments en suspension précipitent dans le fond du ballon 19.

L'insufflation d'air par le tuyau 28 permet une dissolution de l'air dans le liquide, ce qui a pour effet de diminuer encore la densité de la phase aqueuse et de diminuer le temps de précipitation des éléments en suspension.

On a effectué des analyses chimiques du lisier, d'une part, à la sortie du séparateur 2 avant traitement et, d'autre part, à la sortie du ballon 19 d'une installation telle que celle représentée à la Fig. 1 et ce après traitement. Les éléments 12 étaient en polypropylène et le temps de séjour dans la cuve 7 du lisier soumis à des cycles répétés de passage dans le bac 9 a été de 18 heures. Le débit de la pompe 17 était de 1 $m^3$/heure et la pression dans le ballon 19 de 6 bars. Les résultats de ces analyses sont répertoriés dans le tableau I/I annexé. Le prélèvement à la sortie du ballon 19 a été effectué après un temps de séjour du lisier de 1 heure.

On constate une diminution importante de la concentration en matières sèches (MES), de la demande biologique en oxygène à 5 jours (DBO5) et de la demande chimique en oxygène (DCO). On constate également une diminution sensible de l'ammoniaque ($NH_4$) qui semble se traduire par une augmentation des nitrites et des nitrates.

Le liquide en sortie du ballon 19 peut être épandu tel quel sur un sol.

Pour son rejet dans une rivière, sans risque de pollution pour elle, un traitement biologique doit suivre le traitement décrit ci-dessus. Il permettrait de diminuer la DBO5, la DCO et le taux d'azote à des taux admissibles.

Bien que la présente description ait été faite en présentant une installation de traitement de lisier de porc, l'homme de métier comprendra qu'une telle installation peut être utilisée pour le traitement d'effluents divers, tels que les eaux usées domestiques, les eaux de rejet d'usines, etc.

| Paramètres analysés | Unités | Avant Traitement | Après Traitement |
|---|---|---|---|
| Potentiel hydrogène (pH) | | 8,2 | 8,6 |
| Matières en suspension (MES) | mg/l | 11 840 | 336 |
| DBO5 | mg/l | 3 230 | 117 |
| DCO | mg/l | 18 000 | 3 692 |
| Ammonium ($NH_4$) | mg/l | 1 012 | 80,0 |
| Nitrites ($NO_2$) | mg/l | 31,0 | 1 400 |
| Nitrates ($NO_3$) | mg/l | 9 | 325 |
| Chlorures (Cl) | mg/l | 890 | 890 |
| Sodium (Na) | mg/l | 250 | 330 |

Tableau I/I

**Revendications**

1. Procédé de traitement d'effluents consistant en la séparation des éléments en suspension contenus dans la phase aqueuse desdits effluents, caractérisé en ce qu'il consiste:

a) à mettre en contact lesdits effluents soit avec un matériau diélectrique pouvant se charger négativement électrostatiquement si l'on désire séparer des éléments en suspension de charge positive soit un matériau diélectrique pouvant se charger positivement électrostatiquement si l'on désire séparer des éléments en suspension de charge négative, afin d'effectuer une neutralisation des charges des éléments en suspension dans la phase aqueuse desdits effluents,

b) à effectuer un processus de précipitation des effluents dont les éléments en suspension ont leur charge neutralisée, puis

c) à séparer, après précipitation, la phase aqueuse des boues constituées par les éléments qui ont précipité.

2. Procédé selon la revendication 1, caractérise en ce que le processus de précipitation de l'étape b) est une décantation.

3. Procédé selon la revendication 1, caractérisé en ce que le processus de précipitation de l'étape b) consiste à soumettre les effluents dont les charges des éléments en suspension ont été neutralisées à une surpression si bien que lesdits éléments précipitent.

4. Procédé selon la revendication 3, caractérisé en ce que, préalablement au processus de précipitation de l'étape b) mais après l'étape a), on dissout de l'air dans les effluents.

5. Procédé selon une des revendications précédentes, caractérisé en ce que, pour neutraliser les charges positives d'éléments en suspension dans lesdits effluents, on utilise un matériau du type polypropylène.

6. Procédé selon une des revendications 3 à 5, caractérisé en ce que, pour le processus de précipitation, les effluents sont soumis à une surpression comprise entre 2 et 10 bars.

7. Procédé selon la revendication 6, caractérisé en ce que les effluents sont soumis à une surpression de 6 bars.

8. Procédé selon une des revendications précédentes caractérisé en ce que la durée du processus de neutralisation des charges électrostatiques des éléments en suspension est comprise entre 8 et 24 heures.

9. Procédé selon une des revendications précédentes, caractérisé en ce qu'il est appliqué à du lisier qu'on a soumis, au préalable, a une séparation mécanique.

10. Installation pour la mise en oeuvre du procédé selon une des revendications précédentes, caractérisée en ce qu'elle comprend une cuve (7) dans laquelle sont déversés les effluents à traiter, un bac (9) reposant dans la cuve (7) et contenant des éléments (12) d'un matériau permettant la neutralisation prévue à l'étape a) du procédé, une pompe (13) aspirant les effluents dans la cuve (7) et les refoulant au dessus du bac (9) sur les éléments (12) assurant un circuit fermé desdits effluents pour le processus de neutralisation prévu à l'étape a) du procédé.

11. Installation selon la revendication 10, caractérisée en qu'elle comprend une pompe de surpression (17) pour pouvoir injecter sous pression les effluents soumis à l'étape a) du procédé dans un ballon (19) comportant une sortie (21) pour l'évacuation de la phase aqueuse et une sortie (23), dans le fond du ballon (19), pour l'évacuation des boues qui ont précipité selon l'étape b) du procédé.

12. Installation selon la revendication 11, caractérisée en ce que, sur la sortie (21), est prévue une vanne de régulation (24) pour réguler la pression dans le ballon (19).

13. Installation selon le revendication 11 ou 12, caractérisée en ce qu'elle comprend un dispositif de dispersion d'air sous pression (27) pour dissoudre de l'air dans les effluents avant précipitation.

FIG.1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | FR-A-2 632 808 (SOFRECHIM)<br>* figure 2; exemple 2 *<br>--- | 1-4,10 | C05F3/00<br>C02F1/52<br>B01D21/00 |
| A | US-A-3 799 857 (A. D. FRANSE)<br>* colonne 3, ligne 13 - ligne 16; revendication 1; figure 1 *<br>--- | 1,5,10 | |
| A | WORLD PATENTS INDEX LATEST<br>Section Ch, Week 1185,<br>Derwent Publications Ltd., London, GB;<br>Class D, AN 85-063988<br>& HU-A-33 985 (MELYEPITESI TERVEZO ET AL.) 28 Janvier 1985<br>* abrégé *<br>--- | 1 | |
| A | DE-A-2 415 538 (KING)<br>* page 1 - page 2; revendication 1 *<br>--- | 1 | |
| A | DE-A-2 103 647 (CHOUN)<br>* page 10 - page 11, alinéa 1; figure 1 *<br>--- | 1,5,10 | |
| A | WORLD PATENTS INDEX<br>Section Ch, Week 4176,<br>Derwent Publications Ltd., London, GB;<br>Class C, AN 76-77025X<br>& SU-A-496 253 (NWAG)<br>* abrégé * | 1 | DOMAINES TECHNIQUES RECHERCHES (Int. Cl.5)<br><br>B01D<br>C02F<br>C05F |

-----

Le présent rapport a été établi pour toutes les revendications

| Lieu de la recherche | Date d'achèvement de la recherche | Examinateur |
|---|---|---|
| LA HAYE | 22 NOVEMBRE 1991 | MARZENKE J. |